# EUROPEAN PATENT APPLICATION

(11) **EP 4 837 829 A1**
(43) Date of publication of application: **11.11.2026**
(21) Application number: 24916446.8
(22) Date of filing: 19.09.2024
(51) Int. Cl.: B63B 1/38

(54) **GAS DIVERSION AND VENTING APPARATUS AND AIR-LAYER DRAG-REDUCTION SHIP**

(30) Priority: 11.01.2024 CN 202410040501
(71) Applicant: CSSC Shanghai Marine Energy Saving Technology co., Ltd., Shanghai 200011 (CN)
(72) Inventor: ZHANG, Xiaosong, Shanghai 200011 (CN); CHEN, Shaofeng, Shanghai 200011 (CN); GAO, Lijin, Shanghai 200011 (CN); MIAO, Fei, Shanghai 200011 (CN); CHEN, Leiqiang, Shanghai 200011 (CN); HUANG, Guofu, Shanghai 200011 (CN)
(74) Representative: Pulieri, Gianluca Antonio
(86) International application number: PCT/CN2024/119658
(87) International publication number: WO 2025/148394

(57) **Abstract**

Provided are a gas diversion and venting apparatus and an air-layer drag-reduction ship. The gas diversion and venting apparatus is defined by an inner side surface (123), an outer side surface (124), and two end surfaces (121). The two end surfaces (121) are oppositely arranged in a first direction. The inner side surface (123) is arranged opposite to the outer side surface (124). The outer side surface (124) is a smooth curved surface protruding outward. The inner side surface (123) is a flat surface. The inner side surface (123) transitions to the outer side surface (124) via a transition straight edge (125), one end surface (121), a transition arc edge (126), and the other end surface (121) that are connected end to end. The transition straight edge (125) extends along the first direction. In the first direction, the transition arc edge (126) is first away from and then approaches the transition straight edge (125). Along the first direction from one surface (121) to the other surface (121), the projection of the gas diversion and venting apparatus in a plane perpendicular to the first direction first expands and then contracts, and the shape of the projection remains unchanged. The gas diversion and venting apparatus is symmetrically arranged with respect to a central longitudinal section.

## Description

This application claims priority to Chinese Patent Application No. 202410040501.6 filed with the China National Intellectual Property Administration (CNIPA) on Jan. 11, 2024, the disclosure of which is incorporated herein by reference in its entirety.

### TECHNICAL FIELD

The present application relates to the technical field of ships, for example, to a gas diversion and venting apparatus and an air-layer drag-reduction ship.

### BACKGROUND

Ship air layer drag reduction technology refers to a technology for achieving a purpose of reducing frictional resistance of a ship by introducing gas into the bottom of the ship such that the gas covers bottom shell plating of the ship to change the fluid medium around the ship hull. In the application of this technology, as the gas is continuously ejected and the ship moves forward, the gas diffusing downstream backward will have a significant impact on the stern flow field and may even enter the operating area of the propeller, thus reducing the propulsion efficiency of the propeller and adversely affecting the energy efficiency of the ship.

### SUMMARY

The present application provides a gas diversion and venting apparatus and an air-layer drag-reduction ship used for locally forming a pressure difference that is high in the middle and low on two sides to change a local flow field and divert and guide the gas flow.

The present application provides a gas diversion and venting apparatus. The gas diversion and venting apparatus is defined by an inner side surface, an outer side surface, and two end surfaces. The two end surfaces are arranged opposite to each other in a first direction, and the inner side surface is arranged opposite to the outer side surface. The outer side surface is a smooth curved surface protruding outward, and the inner side surface is a flat surface. The inner side surface transitions to the outer side surface via a transition straight edge, one of the two end surfaces, a transition arc edge, and the other of the two end surfaces. The transition straight edge, one of the two end surfaces, the transition arc edge, and the other of the two end surfaces are connected end to end. The transition straight edge extends along the first direction. In the first direction, the transition arc edge is first away from and then approaches the transition straight edge. Along the first direction from one of the two end surfaces to the other of the two end surfaces, the projection of the gas diversion and venting apparatus in a plane perpendicular to the first direction first expands and then contracts, and the shape of the projection remains unchanged. The gas diversion and venting apparatus is symmetrically arranged with respect to a first section. The first section is a central longitudinal section of the gas diversion and venting apparatus and is perpendicular to the first direction.

In one or more embodiments, the projection of the gas diversion and venting apparatus in the plane perpendicular to the first direction is in a semi-waterdrop shape.

In one or more embodiments, in the plane perpendicular to the first direction, a highest point is defined as a farthest point on the projection curve of the outer side surface in the plane perpendicular to the first direction from a projection straight line of the inner side surface, and the distance between the highest point and a projection point of the transition arc edge is smaller than the distance between the highest point and a projection point of the transition straight edge.

In one or more embodiments, the gas diversion and venting apparatus is formed by extending a three-dimensional smooth curved surface by a predetermined thickness.

In one or more embodiments, the gas diversion and venting apparatus is integrally formed.

In one or more embodiments, the inner side surface is provided with a connection area, and the gas diversion and venting apparatus is connected to an external device at the connection area.

The present application also provides an air-layer drag-reduction ship. The air-layer drag-reduction ship includes a ship main body and a propeller, the preceding gas diversion and venting apparatus, and two air-cavity skirt plates that are mounted on the bottom plate of the ship main body. The two air-cavity skirt plates are symmetrically arranged with respect to a second section. The propeller and the gas diversion and venting apparatus are symmetrically arranged with respect to the second section. The second section is a central longitudinal section of the ship main body. Projections of the two air-cavity skirt plates, the gas diversion and venting apparatus, and the propeller on the central longitudinal section are sequentially spaced along a direction from a bow of the ship main body to a stern of the ship main body.

In one or more embodiments, the thickness of the gas diversion and venting apparatus is a, and the thickness of an air-cavity skirt plate is b, where b ≤ a ≤ 1.5b.

In one or more embodiments, in a second direction, the distance between the gas diversion and venting apparatus and the air-cavity skirt plate is c, where 2b ≤ c ≤ 5b, and the second direction is a length direction of the ship main body.

In one or more embodiments, in a third direction, the width of the gas diversion and venting apparatus is d, and the distance between ends of the two air-cavity skirt plates is e, where 0.9e ≤ d ≤ 1.1e, and the third direction is a width direction of the ship main body.

### BRIEF DESCRIPTION OF DRAWINGS

FIG. 1 is a view illustrating the structure of a gas diversion and venting apparatus and a ship from a first perspective according to an embodiment of the present application.
FIG. 2 is a view illustrating the structure of a gas diversion and venting apparatus and a ship from a second perspective according to an embodiment of the present application.
FIG. 3 is a view illustrating the structure of a gas diversion and venting apparatus according to an embodiment of the present application.
FIG. 4 is a view illustrating the structure of a gas diversion and venting apparatus and a ship from a third perspective according to an embodiment of the present application.

### Reference list

- 100: ship main body
- 110: air-cavity skirt plate
- 120: gas diversion and venting apparatus
- 121: end surface
- 122: first section
- 123: inner side surface
- 124: outer side surface
- 125: transition straight edge
- 126: transition arc edge
- 127: highest point
- 130: propeller
- 140: section

### DETAILED DESCRIPTION

Solutions in the present application will be described below in detail in conjunction with the drawings. The embodiments described below are part, not all of the embodiments of the present application.

In the description of the present application, the orientations or position relations indicated by terms such as "center", "above", "below", "left", "right", "vertical", "horizontal", "inside", and "outside" are based on orientations or position relations shown in the drawings. These orientations or position relations are intended only to facilitate and simplify description of the present application, and not to indicate or imply that a device or element referred to must have such specific orientations or must be configured or operated in such specific orientations. Thus, these orientations or position relations are not to be construed as limiting the present application. In addition, terms such as "first" and "second" are used only for the purpose of description and are not to be construed as indicating or implying relative importance. Terms "first position" and "second position" are two different positions. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the present application, unless otherwise specified and limited, the term ''mounted", "connected to each other", or "connected" is to be construed in a broad sense as securely connected, detachably connected, or integrated; mechanically connected or electrically connected; directly connected to each other or indirectly connected to each other via an intermediary; or intraconnected between two components. The specific meanings of these terms in the present application may be understood based on actual circumstances.

Embodiments of the present application are described below. Examples of the embodiments are illustrated in the drawings, where the same or similar reference numerals indicate the same or similar elements or elements having the same or similar functions. The embodiments described below with reference to the drawings are illustrative, only for explaining the present application, and not to be construed as limiting the present application.

In an embodiment, an air-cavity skirt plate is mounted on the bottom of a ship that adopts air-jet drag reduction technology. The air-cavity skirt plate has a certain height so that the air layer on the bottom surface of the ship main body is enclosed within the air-cavity skirt plate and does not escape from the sides, thereby producing a good drag reduction effect. The air-cavity skirt plates are generally arranged at two sides of the bottom of the ship main body and are symmetrically arranged with respect to a second section.

As the ship main body moves forward, both water flow and gas flow move backward. In the absence of other interference, the gas in the air cavity at the bottom of the ship main body naturally flows along the hull surface to the stern of the ship and enters the operating area of the propeller, which adversely affects the propulsion efficiency of the ship main body and does not contribute to the overall navigation performance of the ship main body.

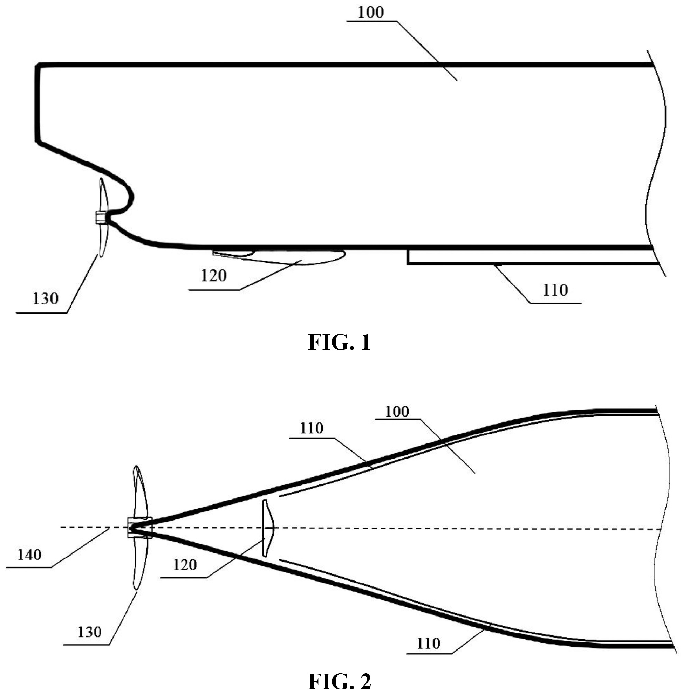

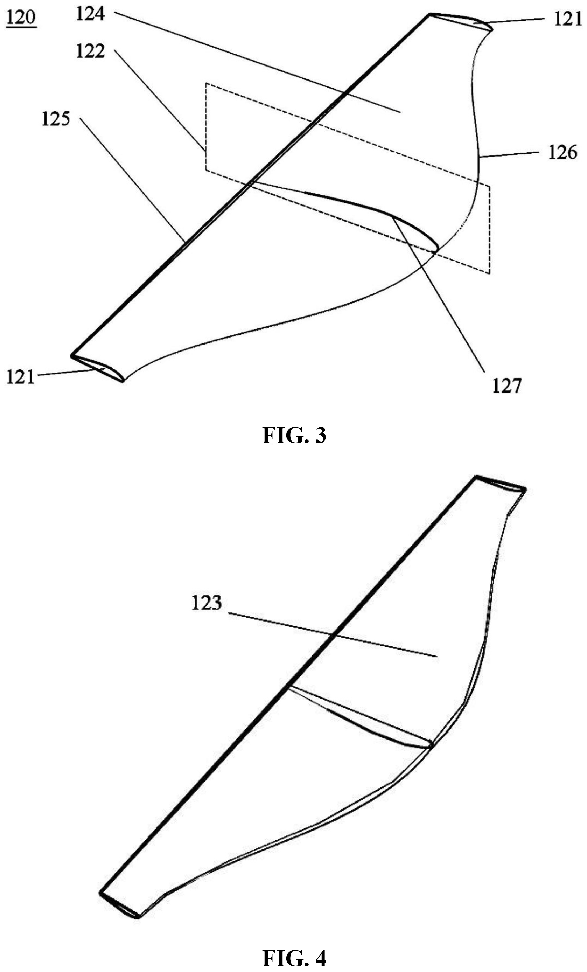

As shown in FIG. 1 to FIG. 4, this embodiment provides an air-layer drag-reduction ship. The air-layer drag-reduction ship includes a ship main body 100 and a propeller 130, a gas diversion and venting apparatus 120, and two air-cavity skirt plates 110. The propeller 130, the gas diversion and venting apparatus 120, and two air-cavity skirt plates 110 are mounted on the bottom plate of the ship main body 100. The two air-cavity skirt plates 110 are symmetrically arranged with respect to a section 140. The propeller 130 and the gas diversion and venting apparatus are symmetrically arranged with respect to the section 140. The section 140 is the central longitudinal section of the ship main body 100. The projections of the air-cavity skirt plates 110, the gas diversion and venting apparatus, and the propeller 130 on the central longitudinal section are sequentially spaced along the direction from the bow of the ship main body 100 to the stern of the ship main body 100 (the length direction of the ship main body 100).

The air-layer drag-reduction ship adopts a design in which the gas diversion and venting apparatus 120 is mounted on the bottom of the ship main body 100. A special configuration component in which pressure is concentrated in the center and released at two sides is disposed at the tail end of the air cavity at the ship bottom. This configuration changes the local flow field and creates a pressure difference in both the transverse and vertical directions. As a result, when the gas at the ship bottom passes through the gas diversion and venting apparatus 120, the gas is diverted toward two sides of the ship main body 100 and is vented through the gap between the gas diversion and venting apparatus 120 and the forward air-cavity skirt plate 110. In this manner, the purpose of diverting and venting the downstream gas of the air layer at the ship bottom is achieved, the downstream gas is prevented from continuing to flow backward into the area of the propeller 130, the adverse effect of the downstream gas on the propulsion efficiency of the ship main body 100 is eliminated, and the application effect of the air-layer drag reduction technology is enhanced. Moreover, the gas diversion and venting apparatus 120 is mounted on the tail portion of the bottom plate of the ship main body 100, and a certain gap is left between the gas diversion and venting apparatus 120 and the air-cavity skirt plate 110. With the arrangement of the structure in the gas flow path, the gas flow is further prevented from flowing directly toward the propeller 130 and is instead guided to vent from two sides of the hull. Thus, the influence of the air-layer drag reduction system on the propulsion of the propeller 130 is reduced, and the overall navigation performance of the air-layer drag-reduction ship is enhanced.

This embodiment also provides a gas diversion and venting apparatus 120 applied to the preceding air-layer drag-reduction ship. The gas diversion and venting apparatus 120 is defined by an inner side surface 123, an outer side surface 124, and two end surfaces 121. The two end surfaces 121 are arranged opposite to each other in a first direction. The inner side surface 123 is arranged opposite to the outer side surface 124. The outer side surface 124 is a smooth curved surface protruding outward. The inner side surface 123 is a flat surface. The inner side surface 123 transitions to the outer side surface 124 via a transition straight edge 125, one end surface 121, a transition arc edge 126, and the other end surface 121. The transition straight edge 125, one end surface 121, the transition arc edge 126, and the other end surface 121 are connected end to end. The transition straight edge 125 extends along the first direction. In the first direction, the transition arc edge 126 is first away from and then approaches the transition straight edge 125. Along the first direction from one end surface 121 to the other end surface 121, the projection of the gas diversion and venting apparatus in a plane perpendicular to the first direction first expands and then contracts, and the shape of the projection remains unchanged. The gas diversion and venting apparatus 120 is symmetrically arranged with respect to a first section 122. The first section 122 is the central longitudinal section of the gas diversion and venting apparatus 120 and is perpendicular to the first direction.

The gas diversion and venting apparatus 120 adopts a three-dimensional curved surface structure. In this structure, in the thickness direction, the center is higher, and the two sides are lower. In the first direction, the center protrudes while the two sides are gentle, and the entire three-dimensional curved surface transitions smoothly. This structure enables the gas diversion and venting apparatus 120 to rise gradually from the end surfaces 121 at two ends to the first section 122 at the center, thereby forming a pressure difference in the thickness direction. In the first direction, the projection of the gas diversion and venting apparatus 120 from one end surface 121 (first end) to the first section 122 (central longitudinal section) gradually increases. Similarly, the projection of the gas diversion and venting apparatus 120 from the other end surface 121 (second end) to the first section 122 (central longitudinal section) gradually increases. In this manner, space is provided for the gas to vent from two sides. The preceding structure allows the gas diversion and venting apparatus 120 to locally form a pressure difference that is high in the middle and low on two sides to change the local flow field, thereby achieving diversion and guidance of the gas flow.

In this embodiment, the first direction is parallel to a third direction, and the thickness direction is perpendicular to the inner side surface 123.

In this embodiment, the projection of the gas diversion and venting apparatus 120 in the plane perpendicular to the first direction is in a semi-waterdrop shape. The semi-waterdrop shape has a simple and reliable structure with high structural stability and favorable stress conditions. The shape satisfies the structural requirements of the gas diversion and venting apparatus 120, reduces the manufacturing difficulty of the gas diversion and venting apparatus 120, and ensures long-term stable operation of the gas diversion and venting apparatus 120.

In one or more embodiments, in the plane perpendicular to the first direction, the highest point 127 is defined as the farthest point on the projection curve of the outer side surface 124 in the plane perpendicular to the first direction from the projection straight line of the inner side surface 123. The distance between the highest point 127 and the projection point of the transition arc edge 126 is smaller than the distance between the highest point 127 and the projection point of the transition straight edge 125. The preceding limitation defines the structure of the gas diversion and venting apparatus 120, restricts the degree of outward protrusion of the outer side surface 124, and ensures the diversion and venting capability of the gas diversion and venting apparatus 120.

Illustratively, the gas diversion and venting apparatus 120 is formed by extending a three-dimensional smooth curved surface by a predetermined thickness. The preceding limitation enables the entire surface of the gas diversion and venting apparatus 120 to transition smoothly through the three-dimensional curved surface. Moreover, ridge line structures on the surface of the gas diversion and venting apparatus 120 for the downstream gas of the air layer can be reduced as much as possible, thereby reducing the resistance of the gas diversion and venting apparatus 120 to water and improving the operating effect of the gas diversion and venting apparatus 120.

In this embodiment, the gas diversion and venting apparatus 120 is integrally formed. The integrally formed design increases the structural strength of the gas diversion and venting apparatus 120, ensures structural stability, reduces the risk of damage to the gas diversion and venting apparatus 120 due to accidents, and extends the service life.

Illustratively, the inner side surface 123 is provided with a connection area (the entire inner side surface 123 serves as the connection area), and the gas diversion and venting apparatus is connected to an external device at the connection area. The preceding limitation enables the outwardly protruding flow-guiding structure at the tail of the gas diversion and venting apparatus 120 to be fixed on the surface of the bottom plate of the ship main body 100. This arrangement helps ensure that the gas diversion and venting apparatus 120 is located at the tail end of the bottom plate of the ship main body 100 and that the gas diversion and venting apparatus 120 is symmetrically arranged with respect to the section 140. This arrangement further ensures that the gas diversion and venting apparatus 120 is arranged downstream of the air-cavity skirt plates 110 on two sides of the ship bottom of the air-layer drag reduction system, thereby achieving smooth installation of the gas diversion and venting apparatus 120 on the air-layer drag-reduction ship.

In this embodiment, the thickness of the gas diversion and venting apparatus 120 is a, and the thickness of the air-cavity skirt plate 110 is b, where b ≤ a ≤ 1.5b. The preceding limitation achieves an optimized design for the thickness of the gas diversion and venting apparatus 120 and the thickness of the air-cavity skirt plate 110. If a is excessively small, the diversion and guidance effect on the gas becomes insignificant. If a is too large, the resistance of the ship increases. That b ≤ a ≤ 1.5b is a preferred numerical range.

In one or more embodiments, in a second direction, the distance between the gas diversion and venting apparatus 120 and the air-cavity skirt plate 110 is c, where 2b ≤ c ≤ 5b, and the second direction is the length direction of the ship main body 100. The preceding limitation achieves an optimized design for the distance between the gas diversion and venting apparatus 120 and the air-cavity skirt plate 110. If c is excessively large, the drag reduction effect on the upstream air layer may be adversely affected. If c is excessively small, the venting of gas from two sides may be hindered. That 2b ≤ c ≤ 5b is a preferred numerical range.

In this embodiment, in a third direction, the width of the gas diversion and venting apparatus 120 is d, and the distance between the ends of the two air-cavity skirt plates 110 is e, where 0.9e ≤ d ≤ 1.1e, and the third direction is the width direction of the ship main body 100. The preceding limitation achieves an optimized design for the width of the gas diversion and venting apparatus 120 and the distance between the ends of the two air-cavity skirt plates 110. If d is excessively small, the gas after diversion may still enter the operating area of the propeller. If d is excessively large, the resistance of the ship increases. That 0.9e ≤ d ≤ 1.1e is a preferred numerical range.

## Claims

1. A gas diversion and venting apparatus, being defined by an inner side surface (123), an outer side surface (124), and two end surfaces (121), wherein the two end surfaces (121) are arranged opposite to each other in a first direction, and the inner side surface (123) is arranged opposite to the outer side surface (124);
the outer side surface (124) is a smooth curved surface protruding outward, and the inner side surface (123) is a flat surface; the inner side surface (123) transitions to the outer side surface (124) via a transition straight edge (125), one of the two end surfaces (121), a transition arc edge (126), and the other of the two end surfaces (121), wherein the transition straight edge (125), one of the two end surfaces (121), the transition arc edge (126), and the other of the two end surfaces (121) are connected end to end,
the transition straight edge (125) extends along the first direction, and in the first direction, the transition arc edge (126) is first away from and then approaches the transition straight edge (125);
along the first direction from one of the two end surfaces (121) to the other of the two end surfaces (121), a projection of the gas diversion and venting apparatus in a plane perpendicular to the first direction first expands and then contracts, and a shape of the projection remains unchanged; and the gas diversion and venting apparatus is symmetrically arranged with respect to a first section (122), wherein the first section (122) is a central longitudinal section of the gas diversion and venting apparatus and is perpendicular to the first direction.

2. The gas diversion and venting apparatus according to claim 1, wherein the projection of the gas diversion and venting apparatus in the plane perpendicular to the first direction is in a semi-waterdrop shape.

3. The gas diversion and venting apparatus according to claim 2, wherein in the plane perpendicular to the first direction, a highest point (127) is defined as a farthest point on a projection curve of the outer side surface (124) in the plane perpendicular to the first direction from a projection straight line of the inner side surface (123), and a distance between the highest point (127) and a projection point of the transition arc edge (126) is smaller than a distance between the highest point (127) and a projection point of the transition straight edge (125).

4. The gas diversion and venting apparatus according to claim 1, wherein the gas diversion and venting apparatus is formed by extending a three-dimensional smooth curved surface by a predetermined thickness.

5. The gas diversion and venting apparatus according to claim 1, wherein the gas diversion and venting apparatus is integrally formed.

6. The gas diversion and venting apparatus according to any one of claims 1 to 5, wherein the inner side surface (123) is provided with a connection area, and the gas diversion and venting apparatus is connected to an external device at the connection area.

7. An air-layer drag-reduction ship, comprising a ship main body (100) and a propeller (130), the gas diversion and venting apparatus according to any one of claims 1 to 6, and two air-cavity skirt plates (110);
wherein the propeller (130), the gas diversion and venting apparatus, and two air-cavity skirt plates (110) are mounted on the ship main body (100), the two air-cavity skirt plates (110) are symmetrically arranged with respect to a section (140), the propeller (130) and the gas diversion and venting apparatus are symmetrically arranged with respect to the section (140), the section (140) is a central longitudinal section of the ship main body (100); and
wherein projections of the two air-cavity skirt plates (110), the gas diversion and venting apparatus, and the propeller (130) on the central longitudinal section are sequentially spaced along a direction from a bow of the ship main body (100) to a stern of the ship main body (100).

8. The air-layer drag-reduction ship according to claim 7, wherein a thickness of the gas diversion and venting apparatus is a, and a thickness of an air-cavity skirt plate (110) of the two air-cavity skirt plates (110) is b, wherein b ≤ a ≤ 1.5b.

9. The air-layer drag-reduction ship according to claim 8, wherein in a first direction, a distance between the gas diversion and venting apparatus and the air-cavity skirt plate (110) is c, wherein 2b ≤ c ≤ 5b, and the first direction is a length direction of the ship main body (100).

10. The air-layer drag-reduction ship according to claim 7, wherein in a second direction, a width of the gas diversion and venting apparatus is d, and a distance between ends of the two air-cavity skirt plates (110) is e, wherein 0.9e ≤ d ≤ 1.1e, and the second direction is a width direction of the ship main body (100).
